# FASCICULE DE BREVET EUROPEEN

(11) **EP 3 265 686 B1**
(45) Date de publication et mention de la délivrance du brevet: **10.04.2019**
(21) Numéro de dépôt: 16707716.3
(22) Date de dépôt: 01.03.2016
(51) Int. Cl.: F16D 29/00, F16D 25/08

(54) **ACTIONNEUR POUR COMMANDE HYDRAULIQUE D'EMBRAYAGE**
AKTUATOR ZUR HYDRAULISCHEN STEUERUNG EINER KUPPLUNG
ACTUATOR FOR HYDRAULIC CONTROL OF A CLUTCH

(30) Priorité: 04.03.2015 FR 1551831
(43) Date de publication de la demande: 10.01.2018
(73) Titulaire: Valeo Embrayages, 80009 Amiens Cedex 2 (FR)
(72) Inventeur: MAUREL, Hervé, 80009 Amiens (FR); MOLLIER, Christophe, 80009 Amiens (FR)
(74) Mandataire: Cardon, Nicolas
(86) Numéro de dépôt international: PCT/EP2016/054341
(87) Numéro de publication internationale: WO 2016/139211

(56) Documents cités:
- DE-A1-102013 201 473
- FR-A1- 2 706 553
- US-A1- 2008 142 326

## Description

La présente invention concerne un actionneur pour commande hydraulique de système de transmission.

L'invention s'applique notamment, mais non exclusivement, à l'actionnement d'un système de transmission pouvant être :
- un embrayage simple ou double dont l'état au repos peut être normalement embrayé ou normalement débrayé,
- un synchroniseur de boîte de vitesses pour transmission manuelle,
- une boîte de vitesses robotisée,
- une boîte de vitesses manuelle à double embrayage,
- un embrayage de couplage d'un moteur thermique avec une machine électrique lorsque ces deux derniers font partie d'une chaîne de propulsion d'un véhicule hybride.

Un tel actionneur est supposé avoir plusieurs états : un état dans lequel il permet la transmission d'un mouvement au sein du système de transmission, c'est-à-dire qu'il est dans l'état embrayé, et un état dans lequel cette transmission ne s'effectue pas, c'est-à-dire qu'il est dans l'état débrayé. Un moteur électrique peut alors permettre de maintenir l'actionneur dans l'un au moins de ces états et le passage de l'un à l'autre de ces états.

Il est souhaitable, notamment pour des raisons de sécurité lorsqu'une défaillance se produit, de maintenir, le cas échéant après l'y avoir amené, l'actionneur dans l'état embrayé ou dans l'état débrayé. Le système de transmission présente naturellement un état stable qui correspond pour l'actionneur à l'un de l'état embrayé et de l'état débrayé. Un maintien de l'actionneur dans l'autre de l'état embrayé et de l'état débrayé est alors souhaitable.

Dans ce but, un maintien mécanique, via un système mécanique dédié, est connu, par exemple de la demande WO2007/045841 ou FR2706553-A1. Un tel maintien nécessite l'emploi de composants additionnels à intégrer à l'actionneur et il est donc complexe et coûteux à réaliser.

En variante, un maintien électrique est possible, via une commande du moteur électrique de l'actionneur. Néanmoins, un tel maintien électrique nécessite la consommation d'énergie électrique par l'actionneur, ce qui va à l'encontre du souci actuel de réduction de consommation de l'énergie électrique, et ce qui produit sur une longue durée un échauffement du moteur électrique de l'actionneur et nécessite un surdimensionnement de ce dernier.

Il existe ainsi un besoin pour permettre un maintien dans l'état embrayé et dans l'état débrayé d'un actionneur pour commande hydraulique, qui soit simple à mettre en oeuvre et peu énergivore.

L'invention vise à répondre à ce besoin et elle y parvient, selon un premier aspect, à l'aide d'un actionneur pour commande hydraulique de système de transmission, comprenant :
- un corps délimitant au moins en partie une chambre, le corps présentant une première ouverture apte à mettre en communication fluidique la chambre et un réservoir basse pression et une deuxième ouverture apte à mettre en communication fluidique la chambre et une conduite haute pression,
- un piston apte à se déplacer dans la chambre entre une première position et une deuxième position,
- un moteur électrique apte à déplacer le piston au moins de la première position vers la deuxième position, et
- un système d'étanchéité apte à interrompre sélectivement la communication fluidique entre la chambre et l'un au moins du réservoir basse pression et de la conduite haute pression,
la chambre étant en communication fluidique avec le réservoir basse pression et avec la conduite haute pression lorsque le piston est dans la première position, et la chambre étant en communication fluidique avec le réservoir basse pression sans être en communication fluidique avec la conduite haute pression lorsque le piston est dans la deuxième position.

Dans la deuxième position, la chambre est à la pression du réservoir basse pression, c'est-à-dire à la pression atmosphérique.

Le corps forme ici le cylindre émetteur de la commande hydraulique. Le corps peut être d'une seule pièce ou, en variante, être formé par différentes pièces. L'une de ces pièces du corps peut alors définir un connecteur à la conduite haute pression.

Le système de transmission avec lequel interagit l'actionneur ci-dessus est de préférence normalement fermé, c'est-à-dire qu'il présente un état stable qui est l'état embrayé. La première position du piston correspond alors à l'état embrayé tandis que la deuxième position correspond à l'état débrayé.

Au sens de la présente demande, le système de transmission avec lequel interagit l'actionneur est dans l'état totalement embrayé lorsque l'actionneur est dans l'état embrayé, et le système de transmission est dans l'état totalement débrayé lorsque l'actionneur est dans l'état débrayé.

Le piston peut s'étendre selon un axe longitudinal confondu avec son axe de déplacement.

« Axialement » s'appréciera ci-après comme signifiant « parallèlement à l'axe longitudinal du piston ».

La chambre étant en communication fluidique avec le réservoir basse pression et avec la conduite haute pression lorsque le piston est dans la première position, du liquide peut s'écouler depuis la conduite haute pression vers le réservoir basse pression à travers la chambre et maintenir alors le piston dans cette première position. Il n'est ainsi pas nécessaire d'alimenter électriquement le moteur électrique de l'actionneur pour obtenir ce maintien du piston dans la première position.

Le système d'étanchéité peut être configuré de manière à ce que la communication fluidique entre le réservoir basse pression et la conduite haute pression soit interrompue dans toute position intermédiaire du piston entre la première position et la deuxième position.

Le système d'étanchéité peut être configuré de manière à ce que la chambre soit en communication fluidique avec la conduite haute pression dans toute position intermédiaire du piston entre la première position et la deuxième position.

En conséquence, le déplacement du piston depuis la première position en réponse à une consigne pour modifier l'état du système de transmission, permet un déplacement de fluide vers la conduite haute pression.

La conduite haute pression est apte à être reliée à un cylindre récepteur de la commande hydraulique. Le déplacement du piston de la première vers la deuxième position permet ainsi d'envoyer du fluide dans le cylindre récepteur, et donc de déplacer un élément agissant par exemple sur une butée d'embrayage pour modifier l'état du système de transmission.

Le système d'étanchéité peut comprendre un premier joint et un deuxième joint à distance l'un de l'autre selon l'axe de déplacement du piston.

Avec un tel système d'étanchéité, le premier joint est par exemple configuré pour s'appliquer contre la surface extérieure du piston, de manière à empêcher à du fluide présent dans la chambre de gagner le réservoir basse pression à travers ce premier joint. Le premier joint est par exemple monté sur la paroi intérieure du corps. Ce joint peut comprendre une partie de fixation sur la paroi du corps et une lèvre flexible s'appliquant contre le piston.

Au moins deux zones de passage, à distance l'une de l'autre selon l'axe de déplacement du piston peuvent être ménagées sur la surface extérieure du piston. Chacune de ces zones peut être formée une ou plusieurs rainures ménagées sur la surface extérieure du piston. Ces rainures peuvent toutes être de même taille, et être réparties de façon uniforme autour de l'axe longitudinal du piston.

D'une zone de passage à l'autre, les rainures peuvent être de même nombre et de même forme.

Chaque zone de passage peut être telle que, lorsque le premier joint s'applique contre cette zone, du fluide présent dans la chambre peut gagner le réservoir basse pression à travers ce premier joint. Lorsque le piston se déplace et que le premier joint ne s'applique contre aucune de ces deux zones, aucun passage fluidique de la chambre vers le réservoir basse pression n'a alors lieu. La lèvre du premier joint peut ainsi épouser la surface extérieure du piston ailleurs qu'au niveau des zones de passage.

Le premier joint s'applique par exemple contre la première zone de passage lorsque le piston est dans la première position et il s'applique contre la deuxième zone de passage lorsque le piston est dans la deuxième position, un passage fluidique étant alors possible malgré la présence du premier joint pour chacune de la première et de la deuxième position du piston.

La première et la deuxième zone de passage se succéder le long de la surface latérale extérieure du piston.

Selon un premier exemple de mise en oeuvre du premier aspect de l'invention, le deuxième joint peut être porté par le corps et le piston peut comprendre une portion d'extrémité contre laquelle s'applique le deuxième joint dans la deuxième position, de manière à empêcher à du fluide présent dans la chambre de gagner la conduite haute pression à travers ce deuxième joint.

Le deuxième joint peut être évidé et disposé dans la deuxième ouverture. La zone vide ménagée par le joint définit ainsi la section de passage dans la deuxième ouverture. Ainsi, lorsque le deuxième joint s'applique contre le piston dans la deuxième position, aucun fluide ne peut s'écouler depuis la chambre vers la conduite haute pression.

Dans cette deuxième position, le premier joint n'empêche pas à du fluide présent dans la chambre de gagner le réservoir basse pression à travers ce premier joint.

La portion d'extrémité du piston peut présenter, dans un plan perpendiculaire à l'axe longitudinal du piston, une section telle que le rapport entre cette section et la section, dans un plan perpendiculaire à ce même axe, de la portion du piston dans laquelle sont disposées les zones de passage ci-dessus, soit compris entre 0,01 et 0,1, étant de préférence compris entre 0,033 et 0,1. Une telle valeur de rapport permet avantageusement de réduire l'effort exercé par le fluide présent dans la conduite haute pression sur le piston alors que ce dernier est dans la deuxième position. Ainsi, une faible quantité d'énergie électrique est nécessaire au moteur électrique pour maintenir le piston dans la deuxième position.

La portion d'extrémité du piston et la portion du piston portant les zones de passage peuvent toutes deux présenter une forme cylindrique dont l'axe est l'axe longitudinal du piston. Au sens de la présente demande, « forme cylindrique » doit être interprétée de façon large, un cylindre sur la paroi latéral duquel les rainures formant une zone de passage sont ménagées est ici encore considéré comme un cylindre.

La portion d'extrémité peut présenter une ou plusieurs rainures. Ces rainures peuvent être disposées dans la partie terminale de la portion d'extrémité et se trouver ainsi au-delà du deuxième joint, en direction de la conduite haute pression, lorsque le piston est dans la deuxième position. Lorsque le piston se rapproche de la deuxième position, ces rainures peuvent permettre une obturation d'abord partielle de la deuxième ouverture. En effet, lorsque la portion d'extrémité vient dans la deuxième ouverture, les rainures définissent un passage entre le piston et le deuxième joint. Une fois le piston dans la deuxième position, le deuxième joint ne s'applique plus contre la partie terminale de la portion d'extrémité, les rainures ne sont alors plus présentes, de sorte que le passage de fluide à travers la deuxième ouverture n'est plus possible.

Selon un deuxième exemple de mise en oeuvre du premier aspect de l'invention, le piston comprend un logement intérieur dans lequel est monté le deuxième joint et le corps comprend un insert creux dans lequel est ménagée la deuxième ouverture, cet insert étant reçu dans le logement intérieur et coopérant avec le deuxième joint dans la deuxième positon, de manière à interrompre la communication fluidique entre la chambre et la conduite haute pression.

La paroi du logement intérieur peut être cylindrique ailleurs qu'au niveau du deuxième joint et l'insert peut présenter une paroi extérieure cylindrique, les dimensions respectives de ces portions cylindriques différant par exemple selon un jeu permettant l'entrée et la sortie de l'insert dans ce logement intérieur. Au niveau du deuxième joint, un renfoncement peut être ménagé dans lequel le deuxième joint est monté. Le deuxième joint est par exemple maintenu axialement par une rondelle emmanchée, soudée, visée ou clipsée dans le renfoncement du piston.

Lorsque l'insert est reçu dans le piston, l'axe longitudinal de l'insert et l'axe longitudinal du piston peuvent être parallèles, voire confondus.

Selon ce deuxième exemple, le piston peut être dépourvu de la portion d'extrémité selon le premier exemple.

Selon le deuxième exemple, la deuxième ouverture est avantageusement configurée pour permettre un écoulement de fluide transversalement, notamment perpendiculairement, à l'axe de déplacement du piston. Dans ce cas, aucun effort axial n'est exercé par la conduite haute pression sur le piston dans cette deuxième position. Il n'est alors pas nécessaire de fournir de l'énergie au moteur électrique pour maintenir le piston dans cette deuxième position.

Ainsi, chacune de la première et de la deuxième position du piston est, selon ce deuxième exemple, une position dans laquelle le piston peut rester sans qu'une consommation d'énergie électrique soit nécessaire. Le piston peut alors être qualifié de piston présentant deux états stables.

Selon ce deuxième exemple de mise en oeuvre, le logement peut être traversant, étant par exemple ménagé sur toute la longueur du piston. L'insert fait par exemple partie du connecteur à la conduite haute pression de la commande hydraulique.

Selon ce deuxième exemple de mise en oeuvre, l'insert peut être creux sur une fraction de sa longueur définissant ainsi un canal intérieur. La deuxième ouverture peut alors être ménagée pour permettre, lorsque le piston n'est pas dans la deuxième position, la circulation de fluide depuis la chambre vers la conduite haute pression via ladite ouverture à travers le canal intérieur. La deuxième ouverture se présente par exemple sous la forme de deux trous opposés.

Le deuxième joint peut présenter deux lèvres à distance l'une de l'autre le long de l'axe longitudinal du piston. Dans un plan contenant l'axe du piston, le deuxième joint peut présenter une section une forme en C, chaque branche du C étant alors définie par une des lèvres tandis qu'un espace libre est ménagé à l'intérieur du C. Le deuxième joint peut alors être en deux parties, chaque lèvre appartenant à l'une de ces parties.

Lorsque le piston est dans la deuxième position, l'une des lèvres peut venir s'appliquer contre l'insert, axialement entre la deuxième ouverture et la conduite haute pression, tandis que l'autre lèvre peut venir s'appliquer contre l'insert, axialement entre la deuxième ouverture et la première ouverture. Le fluide présent dans le canal intérieur est ainsi empêché par les lèvres de gagner la chambre et, le cas échéant, le réservoir basse pression. Le fluide présent dans le canal intérieur ne peut ainsi que gagner l'espace libre qui forme une impasse en terme de circulation de fluide.

Dans tout ce qui précède, un système de transformation de mouvement peut être interposé entre le moteur électrique et le piston.

Ce système de transformation peut être réversible, c'est-à-dire qu'il peut changer de sens de transmission du mouvement, sans apport nécessaire d'énergie électrique.

Le système de transformation peut en outre être linéaire, mettant par exemple en oeuvre des vis à billes ou des rouleaux.

En variante, le système de transformation peut ne pas être linéaire, mettant par exemple en oeuvre un dispositif de type bielle-manivelle ou à came.

Le moteur électrique peut être apte à déplacer le piston également de la deuxième position vers la première position.

Un moyen d'étanchéité peut être interposé entre la chambre et le système de transformation.

L'invention a encore pour objet, selon un deuxième aspect, un actionneur pour commande hydraulique d'embrayage, comprenant :
- un corps délimitant au moins en partie une chambre, le corps présentant une première ouverture apte à mettre la chambre en communication fluidique avec un réservoir basse pression et une deuxième ouverture apte à mettre en communication fluidique la chambre à une conduite haute pression,
- un piston apte à se déplacer dans la chambre, et
- un système d'étanchéité apte à mettre interrompre sélectivement la communication fluidique entre la chambre et l'un au moins du réservoir basse pression et de la conduite haute pression, le piston comprenant un logement intérieur dans lequel est monté un joint du système d'étanchéité et le corps comprenant un insert creux dans lequel est ménagée la deuxième ouverture, l'insert étant apte à être reçu dans le logement intérieur et à coopérer alors avec le joint, de manière à interrompre la communication fluidique entre la chambre et la conduite haute pression.

Tout ou partie des caractéristiques mentionnées ci-dessus, et notamment celles relatives au deuxième exemple mise en oeuvre du premier aspect de l'invention, s'applique à ce deuxième aspect.

Dans tout ce qui précède, un capteur de position mesurant la position du piston dans la chambre peut être prévu.

L'invention a encore pour objet, selon un autre aspect, une commande hydraulique pour système de transmission, comprenant :
- un actionneur tel que défini précédemment,
- un récepteur, et
- une conduite haute pression reliant l'actionneur et le récepteur.

L'invention a encore pour objet un système de transmission comprenant la commande hydraulique ci-dessus. La première position du piston correspond dans ce cas à un état complément embrayé du système de transmission, et la deuxième position correspondant à un état complètement débrayé de ce système de transmission.

L'invention pourra être mieux comprise à la lecture de la description qui va suivre d'exemples non limitatifs de mise en oeuvre de celle-ci et à l'examen du dessin annexé sur lequel :
- la figure 1 représente un système de transmission comprenant un actionneur selon un premier exemple de mise en oeuvre de l'invention,
- la figure 2 est une vue en coupe de l'actionneur de la figure 1,
- la figure 3 est une vue isométrique du piston de l'actionneur de la figure 2,
- les figures 4 à 8 représentent en coupe l'actionneur de la figure 2 pour différentes positions du piston, et
- la figure 9 est une vue en coupe d'un actionneur selon un deuxième exemple de mise en oeuvre de l'invention, lorsque le piston est dans la même position que celle de la figure 8.

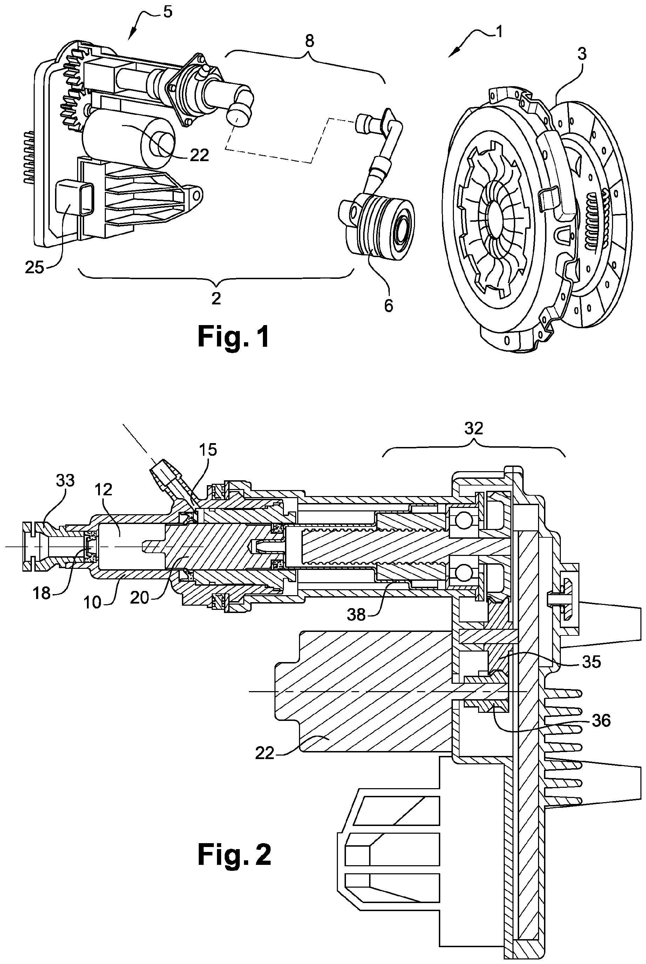

On a représenté sur la figure 1 un système de transmission 1 comprenant une commande hydraulique 2 et un embrayage 3 qui est dans l'exemple décrit un embrayage simple. L'embrayage simple 3 est ici de type normalement fermé.

La commande hydraulique 2 comprend ici un actionneur 5 intégrant un émetteur, un récepteur 6 et une conduite haute pression 8, parcourue par du liquide, et reliant l'émetteur et le récepteur 6.

Le récepteur 6 de l'exemple considéré comprend un piston annulaire coaxial à l'axe de rotation de l'embrayage 3. Ce piston annulaire est dans l'exemple considéré relié à un roulement à billes qui vient déplacer en translation selon l'axe de rotation de l'embrayage le diaphragme de l'embrayage 3, de manière à faire passer l'embrayage 3 d'un état complètement embrayé à un état complètement débrayé, et réciproquement.

Comme on peut le voir sur les figures 1 et 2, l'actionneur 5 comprend un corps 10 délimitant au moins en partie une chambre 12, le corps 10 présentant une première ouverture 15 apte à mettre en communication fluidique la chambre 12 et un réservoir basse pression , et une deuxième ouverture 18 apte à mettre en communication fluidique la chambre 12 et la conduite haute pression 8.

L'actionneur 5 comprend encore un piston 20 se déplaçant dans la chambre 12 entre une première position et une deuxième position, le long d'un axe de déplacement X confondu avec son axe longitudinal.

L'actionneur 5 comprend encore un moteur électrique 22 apte à déplacer le piston 20 dans la chambre 12. Comme on peut le voir sur les figures 1 et 2, le moteur électrique 22 et le piston 20 peuvent être montés côte à côte, l'axe de rotation du moteur électrique 22 étant ici parallèle à l'axe X.

Le corps 10 et le carter du moteur électrique peuvent être supportés par une même paroi du boîtier de l'actionneur 5. Ce boîtier de l'actionneur peut être fixé sur le groupe moto-propulseur ou sur le châssis d'un véhicule.

Le boîtier contient aussi dans l'exemple considéré une carte électronique permettant de commander le fonctionnement du moteur électrique 22 de manière à déplacer le piston 20.

Un connecteur 25 est également porté par le boîtier de l'actionneur 5, dans l'exemple décrit, pour permettre la connexion électrique de la carte électronique à une source d'énergie électrique qui est par exemple la batterie du réseau de bord du véhicule. Le connecteur 25 peut également permettre de connecter la carte électronique au bus CAN (Controller Area Network) du véhicule. On permet ainsi la commande du moteur électrique 22 à partir de l'unité de contrôle moteur (ECU) du véhicule, cette dernière mettant notamment en oeuvre un logiciel de supervision du système de transmission 1.

Le boîtier peut aussi recevoir un capteur non représenté de position d'un élément mobile de l'actionneur 5, par exemple un capteur de position du rotor du moteur électrique 22 ou un capteur de position du piston 20.

Comme représenté, l'actionneur 5 comprend encore un système de transformation de mouvement 32 entre le moteur électrique 22 et le piston 20. Ce système de transformation met par exemple en oeuvre d'une part un réducteur 35, entraîné en rotation par l'arbre de sortie 36 du moteur électrique 22, et un organe 38 de transformation de mouvement roto-linéaire.

L'organe 38 de transformation roto-linéaire est par exemple une vis à billes, une vis écrou ou une vis à roulements planétaires.

Le système de transformation 32 permet ainsi, à partir du mouvement rotatif transmis par l'arbre de sortie 36 du moteur électrique 22, de déplacer en translation le piston 20 de l'actionneur 5 pour modifier l'état de l'embrayage 3.

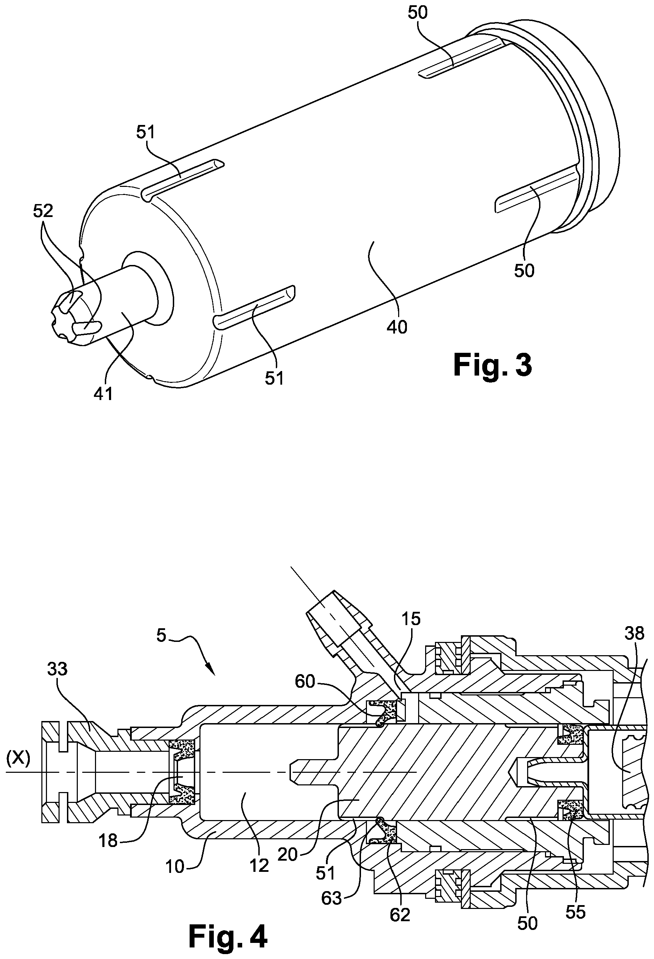

On va maintenant décrire plus en détail, en référence aux figures 3 à 8, un actionneur 5 selon le premier exemple de mise en oeuvre.

Comme on peut le voir, le corps 10 est ici formé par plusieurs pièces distinctes, l'une d'entre elles formant un connecteur 33 sur la conduite haute pression 8.

Comme représenté, un système d'étanchéité est prévu dans le corps 10 qui définit ici l'émetteur de la commande hydraulique 2.

Le système d'étanchéité selon l'invention permet d'interrompre sélectivement :
- la communication fluidique entre la chambre 12 et le réservoir basse pression , et
- la communication fluidique entre la chambre 12 et la conduite haute pression 8.

Plus précisément, le système d'étanchéité est tel que :
- la chambre 12 est en communication fluidique avec le réservoir basse pression et avec la conduite haute pression 8 lorsque le piston est dans une première position, qui correspond dans l'exemple décrit à l'état complètement embrayé de l'embrayage 3, et
- la chambre 12 est en communication fluidique avec le réservoir basse pression sans être en communication fluidique avec la conduite haute pression 8 lorsque le piston 12 est dans une deuxième position, qui correspond dans cet exemple à l'état complètement débrayé de l'embrayage 3.

Comme représenté sur les figures 3 et 4, le piston 20 comprend dans l'exemple considéré une portion sensiblement cylindrique 40 d'axe X prolongée vers la deuxième ouverture 18 par une portion d'extrémité 41, qui est également cylindrique d'axe X et de rayon plus faible. Le rapport entre le rayon de ces portions 40 et 41 est par exemple compris entre 0,1 et 0,33.

Plusieurs séries de rainures axialement décalées axialement d'une série à l'autre sont dans l'exemple considéré ménagées sur la surface extérieure du piston 20. Au sein d'une même série de rainures, ces dernières peuvent elles identiques et décalées autour de l'axe X.

Une série de rainures est par exemple ménagée à proximité de l'extrémité axiale de la portion 40 éloignée de la portion 41 et définit ainsi une deuxième zone de passage 50.

Une série de rainures est ménagée à proximité de l'extrémité axiale de la portion 40 adjacente à la portion 41 et définit une première zone de passage 51.

Une autre série 52 de rainures est ménagée sur la partie terminale de la portion d'extrémité 41, c'est-à-dire sur la partie de la portion 41 qui est la plus éloignée de la portion 40.

Les rainures formant la deuxième zone de passage 50 peuvent être adjacentes à un joint 55 réalisant l'étanchéité de la chambre 12 par rapport au système de transformation de mouvement 32.

Le système d'étanchéité comprend dans l'exemple considéré deux joints distincts espacés axialement selon l'axe X.

Le premier joint 60 est ici monté sur la paroi intérieure du corps 10 et disposé entre la première ouverture 15 et la deuxième ouverture 18. Comme on le verra ultérieurement, ce premier joint 60 permet, selon la position dans la chambre 12 du piston 20, d'empêcher à du fluide présent dans la chambre 12 de gagner le réservoir basse pression, et réciproquement.

Ce premier joint 60 comprend ici une partie de fixation 62 sur la paroi du corps 10 et une lèvre flexible 63 s'appliquant contre le piston 20.

Le deuxième joint 65 est, selon ce premier exemple de mise en oeuvre, également porté par le corps 10, étant par exemple monté dans la deuxième ouverture 18. L'évidement ménagé dans le deuxième joint 65 définit alors la section de passage dans la deuxième ouverture 18. Similairement au premier joint, le deuxième joint 65 présente une lèvre flexible apte à venir s'appliquer contre le piston 20.

On va maintenant décrire en référence aux figures 4 à 8 différents états de l'actionneur 5 en fonction de la position du piston 20.

Sur la figure 4, le piston 20 est dans la première position, qui correspond à l'état complètement embrayé de l'embrayage 3. La vis à bille 38 est ici en butée embrayée.

Comme on peut le voir, dans cette première position, le premier joint 60 s'applique contre la première zone de passage 51. Du fait de la présence des rainures de cette première zone de passage 51, le premier joint 60 ne vient pas épouser tout le pourtour de la surface extérieure du piston 20, de sorte que du liquide peut circuler depuis la conduite haute pression 8 vers le réservoir, via la deuxième ouverture 18, la première zone de passage 51 et la première ouverture 15. L'embrayage est alors dans son état stable, au repos.

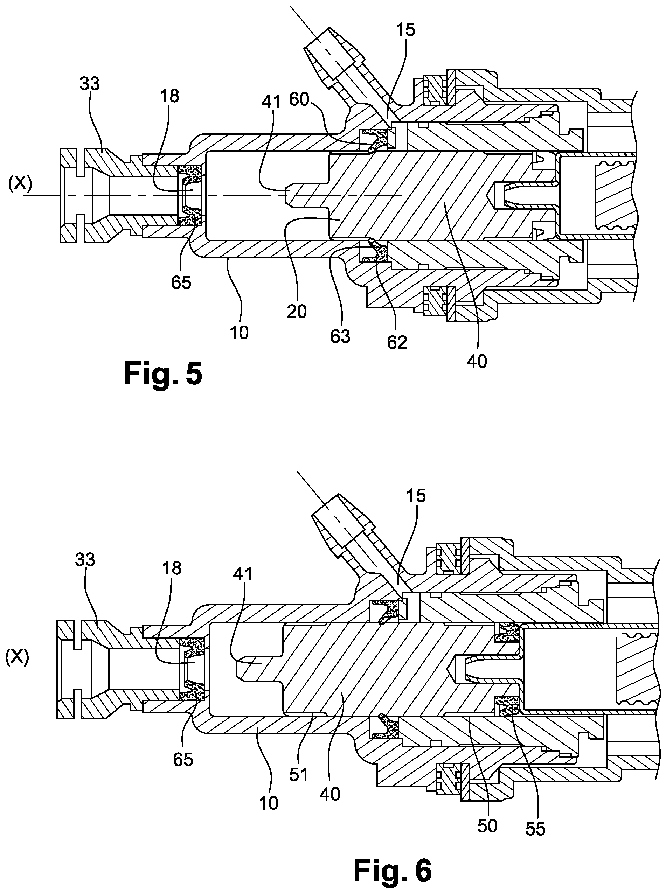

Sur la figure 5, le piston 20, sous l'action du moteur électrique 22, se déplace vers la deuxième position. Sa course de déplacement est ici égale à 1 mm. Comme on peut le voir, le premier joint 60 n'est alors plus en regard de la première zone de passage 51. La lèvre d'étanchéité 63 de ce premier joint 60 s'applique alors contre tout le pourtour de la surface extérieure de la portion 40 du piston 20, de sorte que la communication fluidique par delà le premier joint 60 est impossible.

Le déplacement du piston 20 dans la chambre 12 s'accompagne alors d'un déplacement de fluide vers la conduite haute pression 8, la deuxième ouverture 18 n'étant alors pas obturée.

Sur la figure 6, le piston 20 est à mi-course. Dans l'exemple décrit, sa course est alors de 12 mm. La configuration fluidique dans l'émetteur est la même que sur la figure 5, c'est-à-dire que le fluide présent dans la chambre 12 peut gagner la conduite haute pression 8 mais non le réservoir basse pression.

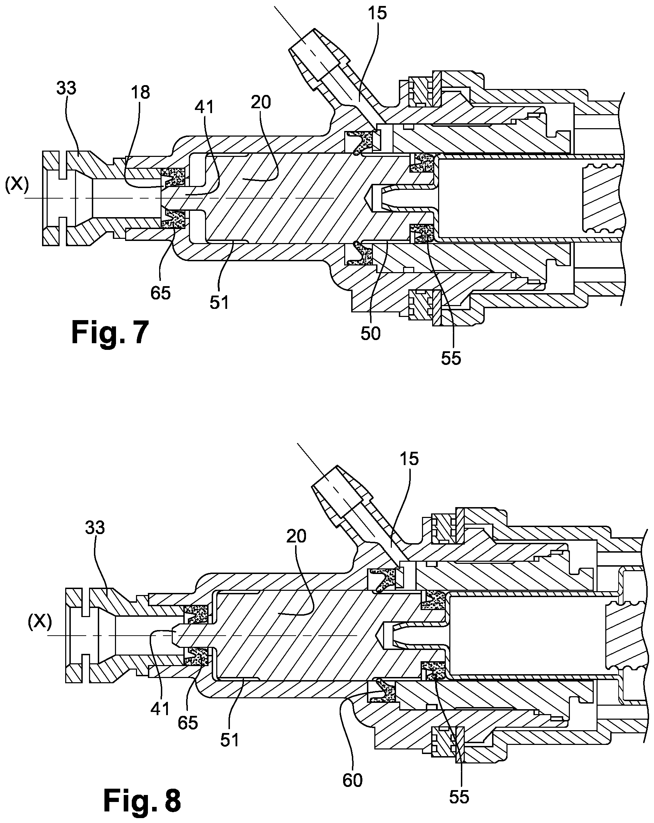

Sur la figure 7, le piston 20 se trouve en position débrayée instable. Sa course est dans l'exemple considéré de 26 mm. Dans cette position, la lèvre 63 du premier joint 60 s'applique toujours contre la surface extérieure du piston 20, de sorte que la communication fluidique à travers ce joint n'est pas possible. Dans la position représentée, la portion d'extrémité 41 du piston 20 pénètre à travers la deuxième ouverture 18 et le deuxième joint 65 coopère avec la partie terminale de cette portion 41. Du fait de la présence de la série de rainures 52 mentionnée précédemment, la communication fluidique entre la conduite haute pression 8 et la chambre 12 via la deuxième ouverture 18 est encore possible.

Sur la figure 8, le piston est dans la deuxième position. Le premier joint 60 se trouve en regard de la deuxième zone de passage 50, de sorte que du liquide peut circuler à travers ce dernier vers le réservoir basse pression. La pression dans la chambre 12 devient alors égale à la pression atmosphérique. Toujours sur la figure 8, le deuxième joint 65 coopère avec la portion d'extrémité 41 du piston 20 ailleurs qu'au niveau de sa partie terminale. Le deuxième joint 65 s'applique alors contre le piston 20 sans qu'un passage de fluide à travers ce dernier soit possible. Le deuxième joint 65 agit comme un clapet anti-retour. Grâce à ce deuxième joint, la pression est maintenue dans la conduite haute pression 8.

Dans cette deuxième position, l'embrayage est dans l'état complètement débrayé.

Dans cette deuxième position, le fluide présent dans la conduite haute pression 8 peut exercer un effort sur la face frontale de la portion d'extrémité 41. Du fait de la section transversale réduite de cette portion d'extrémité 41, l'effort exercée par le fluide sur le piston 20 et tendant à le déplacer de la deuxième position est alors réduit. Un faible effort exercé par le moteur électrique 22 peut alors suffire pour maintenir le piston 20 dans cette deuxième position.

Le déplacement du piston au-delà de celle représentée sur la figure 8 peut n'avoir que peu d'effet sur l'état du système de transmission 1.

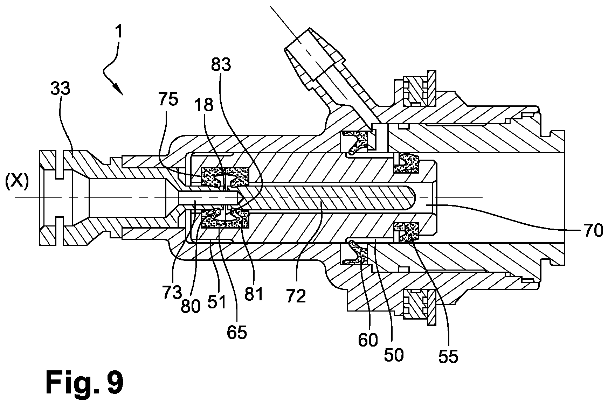

On va maintenant décrire en référence à la figure 9 un actionneur selon un deuxième exemple de mise en oeuvre de l'invention.

L'actionneur de la figure 9 diffère de celui qui vient d'être décrit essentiellement en ce qui concerne le deuxième joint 65, la forme du piston 20 et la forme de la pièce 33 du corps qui forme le connecteur à la conduite haute pression 8.

Le piston 20 comprend ici un logement intérieur 70 dans lequel est monté le deuxième joint 65. Le logement 70 est ici traversant, c'est-à-dire qu'il s'étend sur toute la longueur du piston 20.

La pièce 33 s'étend ici jusque dans la chambre 12 via un insert 72. L'insert 72 est dans l'exemple considéré creux sur une fraction de sa longueur, de manière à définir dans cette fraction un canal intérieur 73.

La deuxième ouverture 18 est dans l'exemple considéré ménagée dans la paroi de l'insert 72, et elle fournit un débouché au fluide présent dans le canal intérieur 73. Dans l'exemple décrit, l'insert 72 est cylindrique au niveau de sa fraction creuse et la deuxième ouverture 18 est formée par deux trous diamétralement opposés. Ces trous permettent un écoulement du fluide depuis ou vers la conduite haute pression 8, sensiblement perpendiculairement à l'axe X.

Lorsque le piston 20 est dans la deuxième position qui est représentée sur la figure 9, la deuxième ouverture est obturée par le deuxième joint 65. Ce deuxième joint 65 est dans l'exemple considéré monté dans un renfoncement 75 ménagé dans la paroi du piston 20 définissant le logement intérieur 70. Dans l'exemple considéré, cette paroi est cylindrique ailleurs qu'au niveau du renfoncement 75. Un jeu peut alors exister entre la dimension transversale du logement 70 et celle correspondante de l'insert 72, pour permettre le déplacement de l'insert 72 dans ce logement 70.

Comme représenté, le deuxième joint 65 peut, selon ce deuxième exemple de mise en oeuvre, présenter dans une section contenant l'axe X une forme de C. Une première lèvre d'étanchéité 80 définit une première branche du C tandis qu'une deuxième lèvre d'étanchéité 81 définit une deuxième branche du C. Entre les deux lèvres 80 et 81, axialement parlant, un espace libre 83 est ménagé. Comme représenté, le deuxième joint 65 peut être formé en deux parties, chaque lèvre 80 ou 81 appartenant à une de ces parties.

Comme on peut le voir sur la figure 9, lorsque le piston 20 est dans la deuxième position, la première lèvre 80 s'applique contre l'insert 72, axialement entre la deuxième ouverture 18 et la conduite haute pression 8, tandis que la deuxième lèvre 81 s'applique contre l'insert 72, axialement entre la deuxième ouverture 18 et la première ouverture 15. Le fluide présent dans le canal intérieur est ainsi empêché par les lèvres 80 et 81 de gagner la chambre 12 et, le cas échéant, le réservoir basse pression. Le fluide présent dans le canal intérieur ne peut ainsi que gagner l'espace libre 83 en impasse.

Dans cette deuxième position, une communication fluidique est possible entre la chambre 12 et le réservoir basse pression à travers le premier joint 60 via la deuxième zone de passage 50, mais la communication fluidique entre la chambre 12 et la conduite haute pression 8 est interrompue grâce au deuxième joint 65. La pression dans la chambre 12 est ainsi égale à la pression atmosphérique, tandis que la pression est maintenue dans la conduite haute pression 8.

La deuxième ouverture 18 étant ici configurée pour ne permettre qu'un écoulement de fluide perpendiculairement à l'axe de déplacement du piston 20, aucun effort axial n'est exercé par la conduite haute pression 8 sur le piston 20 dans cette deuxième position, à la différence de ce qui a été décrit en référence au premier exemple de mise en oeuvre de l'invention. Il n'est alors pas nécessaire de fournir de l'énergie au moteur électrique 22 pour maintenir le piston 20 dans la deuxième position de la figure 9.

L'invention n'est pas limitée aux exemples qui viennent d'être décrits.

L'invention peut permettre d'obtenir un actionneur hydrostatique bi-stable.

## Revendications

1. Actionneur (5) pour commande hydraulique (2) de système de transmission (1), comprenant :
- un corps (10) délimitant au moins en partie une chambre (12), le corps (10) présentant une première ouverture (15) apte à mettre en communication fluidique la chambre (12) et un réservoir basse pression et une deuxième ouverture (18) apte à mettre en communication fluidique la chambre (12) et une conduite haute pression (8),
- un piston (20) apte à se déplacer dans la chambre (12) entre une première position et une deuxième position,
- un moteur électrique (22) apte à déplacer le piston (20) au moins de la première position vers la deuxième position, et
- un système d'étanchéité (60, 65) apte à interrompre sélectivement la communication fluidique entre la chambre (12) et l'un au moins du réservoir basse pression et de la conduite haute pression (8),
la chambre (12) étant en communication fluidique avec le réservoir basse pression et avec la conduite haute pression (8) lorsque le piston (20) est dans la première position, **caractérisé en ce que** la chambre (12) est en communication fluidique avec le réservoir basse pression sans être en communication fluidique avec la conduite haute pression (8) lorsque le piston (20) est dans la deuxième position.

2. Actionneur selon la revendication 1, le système d'étanchéité (60, 65) étant configuré de manière à ce que la communication fluidique soit interrompue entre le réservoir basse pression et la conduite haute pression (8) dans toute position intermédiaire du piston entre la première position et la deuxième position.

3. Actionneur selon la revendication 1 ou 2, le système d'étanchéité (60, 65) étant configuré de manière à ce que la chambre (12) soit en communication fluidique avec la conduite haute pression (8) dans toute position intermédiaire du piston (20) entre la première position et la deuxième position.

4. Actionneur selon l'une quelconque des revendications précédentes, le système d'étanchéité comprenant un premier joint (60) et un deuxième joint (65) à distance l'un de l'autre selon l'axe de déplacement (X) du piston (20).

5. Actionneur selon la revendication 4, le premier joint (60) étant configuré pour s'appliquer contre la surface extérieure du piston (20), de manière à empêcher à du fluide présent dans la chambre (12) de gagner le réservoir basse pression à travers ce premier joint (60).

6. Actionneur selon la revendication 5, au moins deux zones de passage (50, 51), à distance l'une de l'autre selon l'axe de déplacement (X) du piston (20), étant ménagées sur la surface extérieure du piston (20).

7. Actionneur selon la revendication 6, chaque zone de passage (50, 51) étant formée une ou plusieurs rainures ménagées sur la surface extérieure du piston (20).

8. Actionneur selon la revendication 7, chaque zone de passage (50, 51) étant telle que, lorsque le premier joint (60) s'applique contre cette zone, du fluide présent dans la chambre (12) peut gagner le réservoir basse pression à travers ce premier joint (60).

9. Actionneur selon la revendication 8, le premier joint (60) s'appliquant contre la première zone de passage (51) lorsque le piston (20) est dans la première position et ce premier joint (60) s'appliquant contre la deuxième zone de passage (50) lorsque le piston est dans la deuxième position, un passage fluidique étant alors possible malgré la présence du premier joint (60) pour chacune de la première et de la deuxième position du piston (20).

10. Actionneur selon l'une quelconque des revendications 4 à 9, le deuxième joint (65) étant porté par le corps (10) et le piston (20) comprenant une portion d'extrémité (41) contre laquelle s'applique le deuxième joint (65) dans la deuxième position, de manière à empêcher à du fluide présent dans la chambre (12) de gagner la conduite haute pression (8) à travers ce deuxième joint (65).

11. Actionneur selon la revendication 10, la portion d'extrémité (41) du piston (20) présentant une ou plusieurs rainures (52), ces rainures (52) étant notamment disposées dans la partie terminale de la portion d'extrémité (41) du piston (20).

12. Actionneur selon l'une quelconque des revendications 4 à 9, le piston (20) comprenant un logement intérieur (70) dans lequel est monté le deuxième joint (65), et le corps (10) comprenant un insert creux (72) dans lequel est ménagée la deuxième ouverture (18), cet insert (72) étant reçu dans le logement intérieur (70) du piston (20) et coopérant avec le deuxième joint (65) dans la deuxième positon du piston (20), de manière à interrompre la communication fluidique entre la chambre (12) et la conduite haute pression (8).

13. Actionneur selon la revendication 12, la deuxième ouverture (18) étant configurée pour permettre un écoulement de fluide transversalement, notamment perpendiculairement, à l'axe de déplacement (X) du piston (20).

14. Commande hydraulique (2) pour système de transmission (1), comprenant :
- un actionneur (5) selon l'une quelconque des revendications précédentes,
- un récepteur (6), et
- une conduite haute pression (8) reliant l'actionneur (5) et le récepteur (6).

15. Système de transmission (1) comprenant une commande hydraulique (2) selon la revendication 14.

## Patentansprüche

1. Aktuator (5) für eine hydraulische Steuereinrichtung (2) eines Übertragungssystems (1), welcher umfasst:
- einen Körper (10), der wenigstens teilweise eine Kammer (12) begrenzt, wobei der Körper (10) eine erste Öffnung (15), die dafür ausgelegt ist, die Kammer (12) und einen Niederdruckbehälter in Fluidverbindung zu bringen und eine zweite Öffnung (18), die dafür ausgelegt ist, die Kammer (12) und eine Hochdruckleitung (8) in Fluidverbindung zu bringen, aufweist,
- einen Kolben (20), der dafür ausgelegt ist, sich in der Kammer (12) zwischen einer ersten Position und einer zweiten Position zu bewegen,
- einen Elektromotor (22), der dafür ausgelegt ist, den Kolben (20) wenigstens von der ersten Position zur zweiten Position zu bewegen und
- ein Dichtungssystem (60, 65), das dafür ausgelegt ist, die Fluidverbindung zwischen der Kammer (12) und dem wenigstens einen Niederdruckbehälter und der Hochdruckleitung (8) selektiv zu unterbrechen,
wobei die Kammer (12) mit dem Niederdruckbehälter und mit der Hochdruckleitung (8) in Fluidverbindung steht, wenn sich der Kolben (20) in der ersten Position befindet, **dadurch gekennzeichnet, dass** die Kammer (12) mit dem Niederdruckbehälter in Fluidverbindung steht, ohne mit der Hochdruckleitung (8) in Fluidverbindung zu stehen, wenn sich der Kolben (20) in der zweiten Position befindet.

2. Aktuator nach Anspruch 1, wobei das Dichtungssystem (60, 65) derart gestaltet ist, dass die Fluidverbindung zwischen dem Niederdruckbehälter und der Hochdruckleitung (8) in jeder Zwischenposition des Kolbens zwischen der ersten Position und der zweiten Position unterbrochen ist.

3. Aktuator nach Anspruch 1 oder 2, wobei das Dichtungssystem (60, 65) derart gestaltet ist, dass die Kammer (12) in jeder Zwischenposition des Kolbens (20) zwischen der ersten Position und der zweiten Position mit der Hochdruckleitung (8) in Fluidverbindung steht.

4. Aktuator nach einem der vorhergehenden Ansprüche, wobei das Dichtungssystem eine erste Dichtung (60) und eine zweite Dichtung (65) umfasst, die entlang der Bewegungsachse (X) des Kolbens (20) in einem Abstand voneinander angeordnet sind.

5. Aktuator nach Anspruch 4, wobei die erste Dichtung (60) dafür ausgelegt ist, an der Außenfläche des Kolbens (20) zur Anlage zu kommen, so dass verhindert wird, dass in der Kammer (12) vorhandenes Fluid durch diese erste Dichtung (60) hindurch in den Niederdruckbehälter gelangt.

6. Aktuator nach Anspruch 5, wobei wenigstens zwei Durchlassbereiche (50, 51), die entlang der Bewegungsachse (X) des Kolbens (20) in einem Abstand voneinander angeordnet sind, an der Außenfläche des Kolbens (20) ausgebildet sind.

7. Aktuator nach Anspruch 6, wobei jeder Durchlassbereich (50, 51) von einer oder mehreren Nuten gebildet wird, die an der Außenfläche des Kolbens (20) ausgebildet sind.

8. Aktuator nach Anspruch 7, wobei jeder Durchlassbereich (50, 51) so beschaffen ist, dass, wenn die erste Dichtung (60) an diesem Bereich anliegt, in der Kammer (12) vorhandenes Fluid durch diese erste Dichtung (60) hindurch in den Niederdruckbehälter gelangen kann.

9. Aktuator nach Anspruch 8, wobei die erste Dichtung (60) am ersten Durchlassbereich (51) anliegt, wenn sich der Kolben (20) in der ersten Position befindet, und diese erste Dichtung (60) am zweiten Durchlassbereich (50) anliegt, wenn sich der Kolben in der zweiten Position befindet, wobei ein Hindurchtreten von Fluid dann trotz des Vorhandenseins der ersten Dichtung (60) sowohl für die erste als auch für die zweite Position des Kolbens (20) möglich ist.

10. Aktuator nach einem der Ansprüche 4 bis 9, wobei die zweite Dichtung (65) vom Körper (10) getragen wird und der Kolben (20) einen Endabschnitt (41) umfasst, an welchem die zweite Dichtung (65) in der zweiten Position anliegt, so dass verhindert wird, dass in der Kammer (12) vorhandenes Fluid durch diese zweite Dichtung (65) hindurch in die Hochdruckleitung (8) gelangt.

11. Aktuator nach Anspruch 10, wobei der Endabschnitt (41) des Kolbens (20) eine oder mehrere Nuten (52) aufweist, wobei diese Nuten (52) insbesondere im Abschlussteil des Endabschnitts (41) des Kolbens (20) angeordnet sind.

12. Aktuator nach einem der Ansprüche 4 bis 9, wobei der Kolben (20) einen inneren Aufnahmeraum (70) umfasst, in welchem die zweite Dichtung (65) angebracht ist, und wobei der Körper (10) einen hohlen Einsatz (72) umfasst, in welchem die zweite Öffnung (18) ausgebildet ist, wobei dieser Einsatz (72) in dem inneren Aufnahmeraum (70) des Kolbens (20) aufgenommen ist und in der zweiten Position des Kolbens (20) mit der zweiten Dichtung (65) zusammenwirkt, so dass die Fluidverbindung zwischen der Kammer (12) und der Hochdruckleitung (8) unterbrochen wird.

13. Aktuator nach Anspruch 12, wobei die zweite Öffnung (18) dafür ausgelegt ist, ein Fließen von Fluid quer, insbesondere senkrecht, zur Bewegungsachse (X) des Kolbens (20) zu ermöglichen.

14. Hydraulische Steuereinrichtung (2) für ein Übertragungssystem (1), welche umfasst:
- einen Aktuator (5) nach einem der vorhergehenden Ansprüche,
- einen Empfänger (6) und
- eine Hochdruckleitung (8), die den Aktuator (5) und den Empfänger (6) verbindet.

15. Übertragungssystem (1), welches eine hydraulische Steuereinrichtung (2) nach Anspruch 14 umfasst.

## Claims

1. Actuator (5) for hydraulic control (2) of a transmission system (1), comprising:
- a body (10) which delimits a chamber (12) at least partly, the body (10) having a first opening (15) which can put into fluid communication the chamber (12) and a low-pressure reservoir, and a second opening (18) which can put into fluid communication the chamber (12) and a high-pressure duct (8);
- a piston (20) which can be displaced in the chamber (12), between a first position and a second position;
- an electric motor (22) which can displace the piston (20) at least from the first position to the second position; and
- a sealing system (60, 65) which can interrupt selectively the fluid communication between the chamber (12) and at least one out of the low-pressure reservoir and the high-pressure duct (8),
the chamber (12) being in fluid communication with the low-pressure reservoir and with the high-pressure duct (8) when the piston (20) is in the first position,
**characterized in that** the chamber (12) is in fluid communication with the low-pressure reservoir without being in fluid communication with the high-pressure duct (8) when the piston (20) is in the second position.

2. Actuator according to Claim 1, the sealing system (60, 65) being configured such that the fluid communication between the low-pressure reservoir and the high-pressure duct (8) is interrupted in any intermediate position of the piston between the first position and the second position.

3. Actuator according to Claim 1 or 2, the sealing system (60, 65) being configured such that the chamber (12) is in fluid communication with the high-pressure duct (8) in any intermediate position of the piston (20) between the first position and the second position.

4. Actuator according to any one of the preceding claims, the sealing system comprising a first seal (60) and a second seal (65) spaced from one another along the axis of displacement (X) of the piston (20) .

5. Actuator according to Claim 4, the first seal (60) being configured to be applied against the outer surface of the piston (20), such as to prevent fluid which is present in the chamber (12) from reaching the low-pressure reservoir through this first seal (60) .

6. Actuator according to Claim 5, at least two areas of passage (50, 51), spaced from one another along the axis of displacement (X) of the piston (20), being provided on the outer surface of the piston (20) .

7. Actuator according to Claim 6, each area of passage (50, 51) being formed by one or a plurality of grooves provided in the outer surface of the piston (20) .

8. Actuator according to Claim 7, each area of passage (50, 51) being such that, when the first seal (60) is applied against this area, the fluid which is present in the chamber (12) can reach the low-pressure reservoir through this first seal (60).

9. Actuator according to Claim 8, the first seal (60) being applied against the first area of passage (51) when the piston (20) is in the first position, and this first seal (60) being applied against the second area of passage (50) when the piston is in the second position, passage of fluid then being possible despite the presence of the first seal (60) for each of the first and second positions of the piston (20).

10. Actuator according to any one of Claims 4 to 9, the second seal (65) being supported by the body (10), and the piston (20) comprising an end portion (41) against which the second seal (65) is applied in the second position, such as to prevent fluid which is present in the chamber (12) from reaching the high-pressure duct (8) through this second seal (65).

11. Actuator according to Claim 10, the end portion (41) of the piston (20) having one or a plurality of grooves (52), these grooves (52) being arranged in particular in the end part of the end portion (41) of the piston (20).

12. Actuator according to any one of Claims 4 to 9, the piston (20) comprising an inner receptacle (70) in which the second seal (65) is fitted, and the body (10) comprising a hollow insert (72) in which the second opening (18) is provided, this insert (72) being received in the inner receptacle (70) of the piston (20), and cooperating with the second seal (65) in the second position of the piston (20), such as to interrupt the fluid communication between the chamber (12) and the high-pressure duct (8).

13. Actuator according to Claim 12, the second opening (18) being configured to permit flow of fluid transversely, and in particular perpendicularly to the axis of displacement (X) of the piston (20).

14. Hydraulic control (2) for a transmission system (1), comprising:
- an actuator (5) according to any one of the preceding claims;
- a receiver (6); and
- a high-pressure duct (8) connecting the actuator (5) and the receiver (6).

15. Transmission system (1) comprising a hydraulic control (2) according to Claim 14.
